(19) Europäisches Patentamt
European Patent Office
Office européen des brevets

(11) **EP 3 972 795 B1**

(12) **EUROPÄISCHE PATENTSCHRIFT**

(45) Veröffentlichungstag und Bekanntmachung des Hinweises auf die Patenterteilung:
**07.06.2023   Patentblatt 2023/23**

(21) Anmeldenummer: **21720408.0**

(22) Anmeldetag: **16.04.2021**

(51) Internationale Patentklassifikation (IPC):
**B29B 17/00** *(2006.01)*      **B29B 17/02** *(2006.01)*

(52) Gemeinsame Patentklassifikation (CPC):
**B29B 17/0026; B29B 17/02;** B29B 2017/0203;
B29B 2017/0262; B29B 2017/0265;
B29B 2017/0279; B29B 2017/0282; B29L 2031/712;
Y02W 30/52; Y02W 30/62

(86) Internationale Anmeldenummer:
**PCT/EP2021/059862**

(87) Internationale Veröffentlichungsnummer:
**WO 2021/209583 (21.10.2021 Gazette 2021/42)**

(54) **VERFAHREN ZUR SORTENREINEN WIEDERGEWINNUNG VON VORGEBBAREN KUNSTSTOFFANTEILEN AUS EINEM UNSORTIERTEN WERTSTOFFSTROM**

PROCESS FOR THE PURE RECOVERY OF SPECIFIC PLASTIC COMPONENTS FROM AN UNSORTED MATERIAL STREAM

PROCÉDÉ DE RÉCUPÉRATION PURE DE COMPOSANTS PLASTIQUES SPÉCIFIQUES À PARTIR D'UN FLUX DE MATIÈRES NON TRIÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.04.2020   DE 102020110506**

(43) Veröffentlichungstag der Anmeldung:
**30.03.2022   Patentblatt 2022/13**

(73) Patentinhaber: **Brandsch, Rainer**
**82205 Gilching (DE)**

(72) Erfinder: **Brandsch, Rainer**
**82205 Gilching (DE)**

(74) Vertreter: **Charrier Rapp & Liebau**
**Patentanwälte PartG mbB**
**Fuggerstraße 20**
**86150 Augsburg (DE)**

(56) Entgegenhaltungen:
WO-A1-2018/046578      WO-A1-2018/182437
WO-A2-2019/180438      DE-A1- 2 211 882
US-A1- 2019 360 122      US-B1- 8 597 553

**Beschreibung**

Die Erfindung betrifft ein Verfahren zur sortenreinen Wiedergewinnung von vorgebbaren Kunststoffanteilen eines bestimmten Kunststoffmaterials oder einer bestimmten Kunststoffzusammensetzung aus einem unsortierten Wertstoffstrom nach dem Oberbegriff des Anspruchs 1.

Weil Kunststoffe einerseits durch chemische Syntheseverfahren aus endlichen, natürlichen Rohstoffen wie Erdöl, Kohle, Erdgas oder auch aus nachwachsenden Pflanzen hergestellt werden, andererseits in der Regel durch biologische Abbauprozesse von der Natur nicht mehr aufgenommen werden und diese nachhaltig schädigen können, ist es notwendig und sinnvoll, werthaltige Wertstoffe aus einem unsortierten Abfallstrom herauszufiltern und einem Stoffkreislauf zur erneuten Verwendung zuzuführen, anstatt die Wertstoffe in Abfallverbrennungsanlagen thermisch zu verwerten oder auf Müllhalden zu deponieren. Dies betrifft insbesondere Kunststoffe aus Verpackungsmaterialien und v.a. Verpackungsmaterialien aus thermoplastischen Kunststoffen.

Aus dem Stand der Technik sind Verfahren bekannt, um aus einem Stoffstrom mit unbekannter Zusammensetzung die Anteile abzutrennen und herauszufiltern, die ein spezifisches Kunststoffmaterial aufweisen. Eine Abtrennung erfolgt dabei typischerweise anhand von diesem Kunststoffmaterial originär anhaftenden Eigenschaften, d.h. inhärenten Eigenschaften wie z.B. Dichteunterschieden, optischen Eigenschaften, etc., wobei die Abtrennung besser wird, je unterschiedlicher sich diese Eigenschaften von denen anderer Kunststoffmaterialien unterscheiden. Kunststoffmaterialien mit sehr ähnlichen Eigenschaften können dabei nicht bzw. nur schlecht voneinander getrennt werden.

Sortenrein zurückgewonnene Kunststoffe aus Verpackungen sind je nach Verwendungshistorie durch unterschiedlichste niedermolekulare Stoffe kontaminiert - z.B. durch die darin verpackten Produkte wie Mineralölprodukte, Reinigungsmittel, Kosmetika, Pharmazeutika, oder Lebensmittel. Eine Wiederverwendung von kontaminierten Kunststoffen für andere als bisherige Verwendungszwecke ist nicht möglich oder durch gesetzliche Vorgaben verboten. Vor einer Wiederverwendung der wiedergewonnenen Kunststoffe für die Herstellung von z.B. Lebensmittelverpackungen müssen die Verunreinigungen soweit entfernt werden, so dass keine Stoffe in Mengen enthalten sind, die im Widerspruch zu den geltenden rechtlichen Anforderungen stehen.

Ein bekannter Lösungsansatz zur Reinigung von recycelten Polyolefinen besteht zum Beispiel darin, die Polyolefine mit einem geeigneten Lösemittel in einem Quellungs-Reaktor über wenige Stunden anzuquellen, um die enthaltenen Verunreinigungen leichter entfernen zu können, wobei lange Quellzeiten einen wesentlichen Nachteil darstellen. Ein solches Verfahren ist z.B. in der WO 2018 091 356 A1 beschrieben.

Ein weiterer Lösungsansatz besteht darin, Kunststoffe anhand ihrer Verwendungshistorie zu filtern. Hierzu schlägt die DE 10 2017 118 601 A1 die Markierung von Kunststoffen mit spektroskopisch aktiven Stoffen zwecks spektroskopischer Trennung vor. Die DE 4 401 207 A1 zeigt ein ähnliches Verfahren. Die selektive Erkennung und Aussortierung der so markierten Kunststoffe durch spektroskopische Verfahren ist allerdings aufwendig.

Ein weiterer Lösungsansatz zur Trennung vorgebbarer Wertstoffanteile aus einem Abfallstrom ist die Zugabe von magnetischen Partikeln zu den Ausgangsmaterialien des Abfallstroms, so dass diese Ausgangsmaterialien durch magnetische Trennverfahren isoliert werden können. Ein solches Verfahren ist in der WO 2004/012 920 A2 beschrieben. Dabei wird als Einsatzmenge für magnetische Partikel ca. 0,1 bis 5 Gew.-% vorgeschlagen, was eine direkte magnetische Abtrennung ermöglicht, jedoch zu einer - insbesondere bei Verpackungen - ungewünschten, dunklen Einfärbung des Ausgangsmaterials führt.

Die Zugabe von Additiven zu Kunststoffen zwecks Erhöhung ihrer Dichte für eine gravimetrische Trennung ist in der WO 2001/07 166 A1 beschrieben.

Stand der Technik bildet weiterhin die WO 2019 180 438 A2, die die Markierung von Flaschen und anderen Kunststoffbehältern bei der Herstellung über optische Marker gemäß des verwendeten Kunststoffs zeigt, wobei diese Flaschen nach Verwendung eingesammelt, und anhand der Marker in Teilströme aufgespalten werden, wobei jeder Teilstrom anschließend zerkleinert und in einem Extruder extrudiert zu sortenreinen Kunststoffpellets weiterverarbeitet wird.

Des Weiteren ist die Trennung von Kunststoffen im Hochspannungsfeld aufgrund von unterschiedlicher elektrostatischer Ladung von Kunststoff-Flocken durch Reibung bekannt.

Vor dem Hintergrund des oben genannten Standes der Technik ist es Aufgabe der Erfindung, ein Verfahren zur sortenreinen Wiedergewinnung von vorgebbaren Kunststoffanteilen eines bestimmten Kunststoffmaterials anzugeben, mit welchem hohe Massendurchsätze bei ausreichender Selektivität bzw. Trennschärfe bewältigt werden können.

Eine weitere Aufgabe ist es, ein Verfahren anzugeben, mit welchem Verbundmaterialien sortenrein wiedergewonnen werden können. Unter Verbundmaterialien sind Materialien zu verstehen, die mehrere Materialien umfassen und z.B. in matrixartigen oder mehrlagigen Strukturen angeordnet sein können. Zu Verbundmaterialien zählen u.a. Mehrschichtverbunde wie miteinander kaschierte Kunststofffolien oder beschichtete Kunststofffolien.

Eine weitere Aufgabe ist es, ein Verfahren anzugeben, mit welchem recycelte Kunststoffmaterialien sortenrein und in ähnlicher Qualität wie neu hergestellte Kunststoffe ('closed loop recycling' anstelle von 'downcycling') bereitgestellt werden können.

Diese Aufgaben werden gelöst durch ein Verfahren nach Anspruch 1.

Erfindungsgemäß wird ein Verfahren zur sortenreinen Wiedergewinnung von vorgebbaren Kunststoffanteilen eines bestimmten Kunststoffmaterials oder einer bestimmten Kunststoffzusammensetzung aus einem unsortierten Wertstoffstrom angegeben, wobei die vorgebbaren Kunststoffanteile von anderen Kunststoffanteilen desselben Kunststoffmaterials bzw. derselben Kunststoffzusammensetzung anhand zumindest eines bei der Herstellung und/oder Verwendung des Kunststoffs eingebrachten Primärmarkers unterscheidbar gemacht worden sind und wobei das Verfahren zumindest einen ersten Trennschritt umfasst, bei dem der Wertstoffstrom anhand eines ersten Trennungskriteriums aufgetrennt wird in einen, den vorgebbaren Kunststoffanteil umfassenden ersten Recyclat-Strom und einen ersten Teilstrom, wobei das Trennungskriterium Eigenschaften des Primärmarkers nutzt. Dabei handelt es sich um einen Wertstoffstrom, der thermoplastische Kunststoffe umfasst oder zumindest im Wesentlichen aus thermoplastischen Kunststoffen besteht. Erfindungsgemäß wird der Wertstoffstrom vor dem ersten Trennschritt durch Schmelzextrusion zu thermoplastischen Strängen oder Filmen vorzugsweise mit einer vorgegebenen Querschnittsform, extrudiert und die Stränge oder Filme werden anschließend zu Teilchen, vorzugsweise mit einer vorgegebenen Größe, insbesondere einer vorgegebenen maximalen Länge und insbesondere zu Strangabschnitten bzw. Filmabschnitten zerkleinert. Danach werden die Teilchen durch Einbringung in ein strömendes Fluidisierungsmittel fluidisiert. Bevorzugt weisen die Teilchen dabei alle zumindest im Wesentlichen die gleiche Form (Geometrie) auf. Dies ermöglicht eine homogene Verteilung der Teilchen in einem laminar strömenden Fluidisierungsmittel.

Durch die Schmelzextrusion zu Strangabschnitten bzw. Filmabschnitten ist insbesondere eine Trennung von mechanisch fest miteinander verbundenen Materialien, z.B. Matrix- oder Mehrschicht- bzw. Mehrlagen-Verbundstoffen aufgrund von Microphasenseparation in der Schmelze möglich.

Unter Fluidisierung wird das Einbringen von Feststoffen (hier: der zerkleinerten Teilchen) in ein strömendes Fluidisierungsmittel verstanden, z.B. durch Herstellung eines Gemischs aus Feststoffen mit einer Flüssigkeit oder einem Gas. Die Teilchen werden in ein strömendes Fluidisierungsmittel mit laminarer Strömung eingebracht und transportiert, wobei das die Teilchen enthaltende Fluidisierungsmittel anschließend insbesondere als Schwebebett oder als Wirbelschicht, ausgebildet wird. In einem Schwebebett bilden die Feststoffe keine feste und kompakte Schicht, sondern werden von dem Fluid durch den Strömungswiderstand an einer Agglomeration gehindert. In einer Wirbelschicht wird eine Schüttung von Feststoffpartikeln in einem Fluid durch eine aufwärtsgerichtete Strömung in einen fluidisierten Zustand versetzt.

Durch die Zerkleinerung und Fluidisierung der Teilchen kann der Wertstoffstrom in dem erfindungsgemäßen Verfahren fließfähig gemacht werden. Die zerkleinerten Teilchen können mit dem strömenden Fluidisierungsmittel, insbesondere in der laminaren Fluidströmung des Fluidisierungsmittel, transportiert werden. Durch die Fluidisierung kann damit ein zweidimensionaler Stoffstrom in einen dreidimensionalen Stoffstrom überführt werden. Ein dreidimensionaler Stoffstrom weist neben einer Längserstreckung (Transportrichtung) ein kontrollierbares Querschnittsprofil, z.B. ein kreisförmiges Querschnittsprofil, auf. Durch die Fluidisierung gewinnen die Bestandteile des Wertstoffstroms an Beweglichkeit gegenüber einem nicht-fluidisierten Festkörperstrom, wie beispielsweise einem Festkörperstrom auf einem Transportband.

Die Zerkleinerung bzw. Zerteilung der extrudierten Stränge oder Filme kann bspw. mechanisch, z.B. durch eine Schneidevorrichtung, durch einen Luftstrahl oder durch einen Wasserstrahl erfolgen.

Die vorgegebene Querschnittsform der extrudierten Stränge oder Filme kann vorteilhaft durch Auswahl einer entsprechend geformten Extrusionsdüse gewählt werden, etwa kreisförmig (zur Ausbildung von Strängen) oder rechteckig (zur Ausbildung von Filmen) oder mit anderen Geometrien.

Das Fluidisierungsmittel kann eine Flüssigkeit oder ein Gas sein. Besonders vorteilhaft kann als Fluidisierungsmittel Wasser, ein Lösemittel, Luft, ein Inert- oder Edelgas und/oder eine Mischung davon verwendet werden. Wasser als Fluidisierungsmittel ist reaktionsträge, kostengünstig erhältlich und einfach verfügbar, weist jedoch ein hohes Eigengewicht auf, so dass die Umwälzung von Wasser energieintensiv gegenüber gasförmigen Fluidisierungsmitteln ist. Aufgrund der guten Verfügbarkeit von Wasser kann auf eine Wiederverwendung des Fluidisierungsmittels am Ende der Wiedergewinnung der vorgebaren Kunststoffanteile verzichtet werden. Es kann jedoch auch eine Wiederverwendung erfolgen, bspw. nach einer Sieb- oder Filterreinigung des verwendeten Wassers. Der Einsatz von Lösemitteln als Fluidisierungsmittel, ggf. auch nur anteilig, kann sich vorteilhaft auf die Fluidisierung der Partikel sowie den abschließenden Extraktionsschritt auswirken.

Luft, Inert- oder Edelgase weisen dagegen den Vorteil auf, dass sie leicht und reaktionsschnell sind, so dass nur geringe Energiemengen zur Umwälzung des Fluidisierungsmittels notwendig sind. Vorzugsweise wird das Fluidisierungsmittel am Ende der Wiedergewinnung der vorgebbaren Kunststoffanteile wiederverwendet, bspw. durch eine Filterung, so dass das Fluidisierungsmittel in einem geschlossenen Kreislauf eingesetzt wird. Dadurch kann der Bedarf an Fluidisierungsmittel gering gehalten werden.

Vorteilhaft werden die extrudierten Stränge oder Filme vor der Abtrennung der vorgebbaren Kunststoffanteile in Teilchen mit definierter Form zerkleinert bzw. micronisiert wobei sie mindestens in einer Dimension eine maximale Erstreckung kleiner als 1000 $\mu$m, bevorzugt kleiner als 500 $\mu$m aufweisen.

Dabei können die Teilchen nach der Zerkleinerung in mehreren, oder auch nur in einer Dimension Abmessungen kleiner als 1000 μm aufweisen.

Vorzugsweise weisen die Teilchen bezüglich der Querschnittsform in wenigstens einer Querschnitts-Dimension (im Falle von folienartigem Extrudat und Zerteilung in Plättchen oder Filmabschnitten) oder auch in zwei Querschnitts-Dimensionen (im Falle von z.B. strangartigem Extrudat und Zerteilung in Fäden bzw. Strangabschnitten) Querschnitts-Abmessungen kleiner als 1000 μm, bevorzugt kleiner 500 μm, auf. Durch eine Zerkleinerung können die Fließeigenschaften der Teilchen im Fluidisierungsmittel verbessert werden. Durch eine Zerkleinerung können weiterhin die chemischen Eigenschaften bzw. die Reaktionsfreudigkeit der Teilchen vorteilhaft beeinflusst werden. Insbesondere kann ein hohes Oberflächen-zu-Volumen-Verhältnis Reaktionszeiten bei physikalischen oder chemischen Prozessen, insbesondere in einem Extraktionsverfahren, herabsetzen.

Unter Micronisierung ist eine Zerkleinerung auf Teilchengrößen mit definierter Form mit einer maximalen Erstreckung in eine Dimension , insbesondere bzgl. einer Längserstreckung und/oder einem maximalen Querschnittsdurchmesser von kleiner 1000 μm, insbesondere weniger als 500 μm, zu verstehen. Durch eine Verkleinerung weisen die einzelnen Teilchen des Wertstoffstroms nur geringe Massen auf und erlangen dadurch eine sehr gute Steuerbarkeit, d.h. die Bewegungsrichtung und/oder Geschwindigkeit der Teilchen lässt sich durch geringe äußere Kräfte verändern. Die Längserstreckung der Teilchen kann dabei entlang der Extrusionsrichtung, mit der die extrudierten Stränge oder Filme die Extrusionsdüse verlassen, definiert werden.

Bevorzugt werden bei der Zerkleinerung alle Teilchen auf eine vergleichbare Größenordnung zerkleinert, z.B. alle Teilchen auf Längs- und/oder Querschnitts-Abmessungen zwischen 400-800 μm, auf Längs- und/oder Querschnitts-Abmessungen zwischen 200-400 μm oder auf Längs- und/oder Querschnitts-Abmessungen zwischen 50-300 μm oder vorteilhaft zwischen 1-50 μm. In der Regel liegen die Teilchen des Wertstoffstroms nach der Zerkleinerung der Teilchen in einer vom Zerkleinerungsverfahren abhängigen, gaußförmigen Partikelgrößenverteilung der Teilchen mit einem mittleren Partikeldurchmesser oder -volumen vor. Je geringer die Streuung der Abmessungen der Teilchen (also des mittleren Partikeldurchmessers oder -volumens) ist, desto ähnlicher ist das Verhalten der einzelnen Teilchen und desto besser steuerbar sind die Teilchen in dem Fluidisierungsmittel. Die vorzugswürdige Teilchengröße kann je nach Eigenart des Wertstoffstroms bzw. der darin enthaltenen Bestandteile variieren.

Bevorzugt werden die Stränge oder Filme zu Teilchen mit anisotroper Geometrie extrudiert und zerkleinert, insbesondere mit einer Längserstreckung verschieden von einer Querschnittserstreckung. Durch eine anisotrope Geometrie erhalten die Teilchen bei der Fluidisierung eine Vorzugsrichtung, nach welcher sich die Teilchen in dem Fluidisierungsmittel auf vorhersehbare Weise ausrichten können. Dadurch werden Verwirbelungen in dem Fluidisierungsmittel vermieden bzw. verringert, so dass sich im strömenden Fluidisierungsmittel ein im Wesentlichen laminares Strömungsfeld ausbildet. In einem laminaren Strömungsfeld sind die Teilchen des Wertstoffstroms besser steuerbar. Die Teilchen sind dabei homogen in dem Fluidisierungsmittel verteilt.

Eine anisotrope Form kann zweckmäßig über den Formfaktor als "aspect ratio" oder Seitenverhältnis $A_R$ ausgedrückt bzw. eingestellt werden. Das Seitenverhältnis $A_R$ ist eine Funktion des größten Durchmessers $d_{max}$ und des kleinsten Durchmessers $d_{min}$ orthogonal dazu, d.h.

$$A_R = d_{min}/d_{max.}$$

Das normalisierte Seitenverhältnis $A_R$ variiert von annähernd Null für ein sehr längliches Teilchen bis nahe Eins für ein gleichachsiges Teilchen.

Das Seitenverhältnis wird vorzugsweise kleiner 0,8, bevorzugt kleiner 0,7 oder besonders bevorzugt kleiner 0,5 gewählt.

Zusätzlich oder alternativ zur Verwendung des Seitenverhältnisses $A_R$ kann eine anisotrope Geometrie der Teilchen mittels der Wadell-Sphärizität ausgedrückt bzw. eingestellt werden. Vorteilhaft ist die Formgebung der Teilchen derart, dass eine Wadell-Sphärizität von kleiner 0,8 vorliegt, bevorzugt von kleiner 0,75 und besonders bevorzugt von kleiner 0,7.

Die Wadell-Sphärizität ist dabei definiert als $\Psi = \dfrac{x_{V^2}}{x_{S^2}}$ , wobei $x_S$ den oberflächenäquivalenten Durchmesser und $x_V$ den volumenäquivalenten Durchmesser des Teilchens bzgl. einer äquivalenten Kugel darstellt. Es gilt:

$$x_V = \sqrt[3]{\frac{6V}{\pi}} \text{ und } x_S = \sqrt{\frac{S}{\pi}},$$

wobei S die Oberfläche und V das Volumen des Teilchens sind. Für ein zylindrisches Teilchen, dessen Höhe das 2,5fache des Durchmessers ist, ergibt sich z.B. eine Sphärizität nach Wadell von 0,804574.

Besonders vorteilhaft kann die Extrusion der Stränge oder Filme, deren Zerkleinerung zu Teilchen und/oder deren Fluidisierung im Fluidisierungsmittel kontinuierlich erfolgen. Durch ein kontinuierliches Verfahren lassen sich hohe Massendurchsätze realisieren.

Zur Markierung bzw. Kennzeichnung der vorgebbaren Kunststoffanteile werden in die vorgebbaren Kunststoffanteile bei der Herstellung und/oder Verwendung des Kunststoffs Markerpartikel eingebracht oder es werden Markerpartikel mit den vorgebbaren Kunststoffanteilen verbunden, so dass die vorgebbaren Kunststoffanteile gegenüber gleichartigen Kunststoffanteilen ohne Markerpartikel anhand der Materialeigenschaften in einem Kraftfeld, insbesondere der Dichte-Eigenschaften und/oder elektrischer Ladungseigenschaften und/oder magnetischer Eigenschaften und/oder elektromagnetischer, insb. optischer, Eigenschaften unterscheidbar sind.

Als Markerpartikel können Partikel mit gegenüber dem bestimmten Kunststoffmaterial ausgezeichneten, d.h. stark abweichenden Materialeigenschaften eingesetzt werden wie z.B. Magnetit zur Kennzeichnung via magnetischer Eigenschaft oder Bentonit zur Kennzeichnung via elektrostatischer Eigenschaft. Andere Markerpartikel sind möglich, ebenso wie der Einsatz von mehreren Markern in Kombination.

Die Größe der eingebrachten Markerpartikel ist dabei vorzugsweise kleiner als die Größe der kleinsten Teilchen, in welche der Wertstoffstrom zerkleinert wurde. Dies stellt eine gleichmäßige Verteilung der Marker in dem zerkleinerten Wertstoffstrom sicher.

Vorteilhaft können die vorgebbaren Kunststoffanteile neben einem Primärmarker mindestens einen Sekundärmarker und/oder weitere Marker umfassen. Durch die Verwendung von mehreren Markern kann eine tiefergestaffelte Unterscheidung von z.B. gleichartigen Kunststoffanteilen mit mehreren Verwendungshistorien erfolgen oder ein Wertstoffstrom gleichzeitig in unterschiedliche Fraktionen, insbesondere mit unterschiedlichen Kunststoffmaterialien bzw. -sorten und/oder nach Materialien mit unterschiedlicher Verwendungshistorie getrennt werden.

Beispielsweise kann ein Primärmarker dafür eingesetzt werden, thermoplastische Materialien mit definierter Zusammensetzung und/oder Verwendungshistorie, z.B. Lebensmittelverpackungen, aus einem undefinierten Wertstoffstrom herauszufiltern, während ein Sekundärmarker eingesetzt werden kann, um aus den herausgefilterten thermoplastischen Materialien mit definierter Zusammensetzung und/oder Verwendungshistorie einzelne Materialfraktionen (z.B. unterschiedliche Kunststoffsorten) herauszutrennen.

Als Marker eingesetzte Partikel können eine Oberflächenmodifikation aufweisen, d.h. sie weisen eine bewusst gestaltete bzw. designte Oberfläche auf. Dadurch können Markereigenschaften verstärkt oder neue Eigenschaften hinzugefügt werden. Durch eine Oberflächenmodifikation kann z.B. ein Strömungswiderstand oder eine Benetzungsfähigkeit eines mit dem Markerpartikel markierten Teilchens gezielt beeinflusst werden. Insbesondere kann damit das Fluidisierungsverhalten und das Fließverhalten eines markierten Teilchens gezielt eingestellt werden.

Zur Trennung verschiedener Kunststoffanteile aus einem un- oder vorsortierten Wertstoffstrom mit demselben Marker können die verschiedenen Kunststoffanteile mit demselben Marker in unterschiedlicher Menge markiert werden. Beispielsweise kann ein erster Kunststoffanteil doppelt so viele Markerpartikel aufweisen wie ein davon verschiedener Kunststoffanteil.

In einer bevorzugten Ausführung des Verfahrens ist der Wertstoffstrom ein thermoplastischer Wertstoffstrom, d.h., dass der Wertstoffstrom im Wesentlichen nur thermoplastisches Material enthält. Ein thermoplastischer Wertstoffstrom kann gegebenenfalls nach bzw. durch eine Vorsortierung eines anfänglich unsortierten Wertstoffstroms bereitgestellt werden. Ein thermoplastischer Wertstoffstrom weist den Vorteil der (vollständigen) Einschmelzbarkeit auf. Dadurch werden neue Verfahrensschritte bzw. Behandlungsoptionen, insbesondere die Schmelzextrusion, verfügbar.

Bevorzugt umfasst bzw. bewirkt die Zerkleinerung der extrudierten Stränge oder Filme gleichzeitig auch eine Microseparierung der im Wertstoffstrom vorhandenen Kunststoffsorten. Dies kann dadurch erfolgen, dass der Wertstoffstrom zu Strängen mit einem vorgegebenen Durchmesser extrudiert und die Stränge danach durch Zuschneiden auf eine vorgegebene (maximale) Länge zerkleinert werden, wobei der Durchmesser der Stränge bevorzugt unterhalb einer Größe von beim Aufschmelzen in der Schmelze als sortenrein vorliegenden Phaseninseln nicht mischbarer Polymere bzw. Kunststoffsorten liegt.

Durch den so gewählten Durchmesser der Stränge sind die Stränge über den Querschnitt jeweils sortenrein. So entstehen bei der Extrusion und durch die anschließende Zerkleinerung sortenreine Strangabschnitte mit unterschiedlichen Kunststoffsorten, wobei die nicht mischbaren Polymere an den Grenzflächen der Strangabschnitte einfach auftrennbar sind. Durch eine Microseparierung können insbesondere Verunreinigungen von Teilchen einer Kunststoffsorte mit einer anderen Kunststoffsorte vermieden oder zumindest reduziert werden.

Eine Extrusion des aufgeschmolzenen Wertstoffstroms zu Folien mit einer vorgegebenen Schichtdicke, die bevorzugt unterhalb der Größe der sortenrein vorliegenden Phaseninseln liegt, kann ebenfalls zur Microseparation eingesetzt werden. Diese ist im Sinne der Erfindung gleichwirkend mit der Extrusion in Strängen mit einem vorgegebenen Durchmesser unterhalb einer Größe von beim Aufschmelzen in der Schmelze als sortenrein vorliegenden Phaseninseln nicht mischbarer Polymere bzw. Kunststoffsorten.

Das erfindungsgemäße Verfahren kann mehrere gleichartige oder unterschiedliche, nacheinander ausgeführte Trennschritte zur Auftrennung des Wertstoffstroms anhand bestimmter Trennkriterien umfassen. Durch zusätzliche Trennschritte lassen sich weitere Rohstoffe aus dem Wertstoffstrom wiedergewinnen bzw. abscheiden. Durch zusätzliche Trennschritte kann auch die Abscheidungsrate eines vorgebbaren Kunststoffanteils aus dem Wertstoffstrom erhöht werden.

Der Wertstoffstrom kann auch einen oder mehrere Trennschritte mehrfach durchlaufen. Dadurch kann die Zahl der für einen Trennschritt vorzuhaltenden Apparaturen gesenkt und die die Abscheidungsrate eines vorgegebenen Kunststoffanteils gleichzeitig erhöht werden.

Das erfindungsgemäße Verfahren zur sortenreinen Wiedergewinnung kann insbesondere einen zweiten Trennschritt umfassen, bei dem ein Recyclatstrom anhand eines zweiten Trennungskriteriums in einen zweiten Recyclat-Strom und einen zweiten Teilstrom aufgetrennt wird, wobei der Trennschritt als Trennungskriterium (auch) Eigenschaften eines Sekundärmarkers nutzt. Dadurch lassen sich sehr ähnliche Kunststoffsorten mit hoher Selektivität voneinander trennen.

Das erfindungsgemäße Verfahren kann weiterhin einen dritten Trennschritt umfassen, bei dem ein Recyclatstrom anhand eines dritten Trennungskriteriums aufgetrennt wird in einen dritten Recyclat-Strom und einen dritten Teilstrom, wobei der Trennschritt als Trennungskriterium (auch) eine den Kunststoffanteilen natürlich anhaftende bzw. inhärente Eigenschaft nutzt.

Durch die vorgenannten weiteren Trennschritte lassen sich weitere Bestandteile des WertstoffStroms gezielt abscheiden.

Als Trennungskriterium können bevorzugt Eigenschaften des Primärmarkers und/oder des Sekundärmarkers oder auch dem vorgebbaren Kunststoffanteil natürlich anhaftende, also inhärent vorhandene Eigenschaften oder eine Kombination solcher Eigenschaften genutzt werden. Dadurch lässt sich eine weitreichende Trennbarkeit von unterschiedlichen Kunststoffanteilen realisieren. Die Verwendung der Eigenschaften des Primärmarkers und/oder des Sekundärmarkers als Trennungskriterium ermöglicht eine besonders effiziente Verfahrensführung, weil hierbei in einem Trennschritt, in dem der Wertstoffstrom aufgetrennt wird, gleichzeitig eine Identifizierung und Separierung des vorgebbaren Kunststoffanteils aus dem Wertstoffstrom erfolgt, weshalb kein gesonderter Schritt zur Identifizierung der mit einem Marker versehenen und dadurch vorgegebenen Kunststoffanteile notwendig ist.

Bevorzugt wird der zerkleinerte und fluidisierte Wertstoffstrom zur Abtrennung der vorgebbaren Kunststoffanteile zumindest einem Kraftfeld ausgesetzt. Kraftfelder haben den Vorteil, dass Sie berührungslos wirken. In einem Kraftfeld können in einem Fluidisierungsmittel gelöste Teilchen daher auf sehr einfache Art und Weise anhand ihrer Kraftfeldeigenschaften voneinander getrennt werden.

Das Kraftfeld zur Abtrennung der vorgebbaren Kunststoffanteile kann insbesondere ein Gravitationsfeld, ein magnetisches Feld, ein elektrostatisches Feld oder ein elektromagnetisches Feld sein.

Der zerkleinerte und fluidisierte Wertstoffstrom kann insbesondere in ein zu einer Strömungsrichtung des fluidisierten Wertstoffstroms bevorzugt senkrecht oder parallel ausgerichtetes Kraftfeld eingebracht werden. Das Kraftfeld kann auch auf andere Art ausgerichtet sein, z.B. schräg zur Strömungsrichtung des fluidisierten Wertstoffstroms. In einem parallel zur Strömungsrichtung ausgerichteten Kraftfeld kann die Geschwindigkeit der Teilchen in Strömungsrichtung beeinflusst werden. In einem senkrecht zur Strömungsrichtung ausgerichteten Kraftfeld kann die Geschwindigkeit der Teilchen in einer Vertikalen zur Strömungsrichtung beeinflusst werden. Durch selektive Geschwindigkeits- und/oder Ortsveränderung der Teilchen können Teilchen selektiv aus dem Wertstoffstrom herausgefiltert werden.

Vorteilhaft können in einem Trennungsschritt auch mehrere, Kraftfelder eingesetzt bzw. kombiniert werden. Insbesondere können mehrere Kraftfelder miteinander überlagert werden. Dadurch ist eine multifaktorielle Trennung in nur einem Trennungsschritt möglich. Es ist jedoch auch möglich, den Wertstoffstrom nacheinander einer Mehrzahl von hintereinander angeordneten Kraftfeldern auszusetzen. Dabei können auch überlagerte Kraftfelder hintereinander angeordnet sein.

Beispielsweise kann senkrecht zur Fließrichtung ein Gravitationsfeld angelegt sein, während gleichzeitig parallel zur Fließrichtung ein elektrisches Feld angelegt ist. Bei gleichem hydrodynamischen Querschnitt (z.B. gleichem Durchmesser von zylindrischen Filamenten) werden Teilchen mit mehr Ladungsträgern in Fließrichtung stärker beschleunigt und legen bei einer definierten Fließzeit einen längeren Weg zurück als diejenigen Teilchen mit weniger Ladungsträgern, d.h. es erfolgt eine räumliche Separation über die Weglänge. Gleichzeitig erfolgt bei einem gegebenen Dichteunterschied eine räumliche Separation der fluidisierten Teilchen senkrecht zur Fließrichtung. Damit kann eine selektive Trennung von vorgebbaren Kunststoffanteilen durch Abzweigung von Teil- bzw. Recyclatströmen des fluidisierten Wertstoffstroms bei unterschiedlichen Querschnittspositionen und Weglängen erfolgen.

Vorteilhaft umfasst das Verfahren zur sortenreinen Wiedergewinnung von vorgebbaren Kunststoffanteilen einen Aufbereitungsschritt, bei welchem Markerpartikel und/oder andere, unerwünschte Kontaminierungen aus den Teilchen der vorgebbaren Kunststoffanteile eines Recyclat-Stroms ausgesondert werden. Die Aussonderung kann z.B. durch Extraktion und/oder Emission erfolgen, wobei das Fluidisierungsmittel auch als Extraktionsmittel dienen kann.

Bei der Extraktion werden unerwünschte Kunststoffanteile durch bzw. in einem Extraktionsmittel gebunden. Als Extraktionsmittel eignen sich je nach Anwendungsfall z.B. Wasser, Alkohole oder überkritisches $CO_2$. Als Extrakti-

onsverfahren kann z.B. die Wasserdampfdestillation eingesetzt werden. Dabei wird das Extraktionsmittel von den Kunststoffpartikeln zum Teil aufgenommen und muss im Anschluss an die Extraktion durch Emission oder weitere Extraktion (z.B. Trocknung mit heißer Luft oder Wasserdampfdestillation) wieder entfernt werden.

Vorteilhaft werden die Teilchen des Wertstoff- oder Recyclatstroms vor der Extraktion durch ein Quellmittel angequollen. Durch die Quellung kann die Aussonderung beschleunigt und dadurch die Verfahrensdauer für die Extraktion verkürzt werden.

Das Extraktionsmittel weist vorzugsweise eine gute Löslichkeit für die zu extrahierenden Stoffe auf. Vorzugsweise liegt die Polarität des Extraktionsmittels dabei, ausgedrückt als Oktanol/Wasser-Verteilungskoeffizient $K_{OW}$, in einem Bereich zwischen oder nahe an der Polarität der Kunststoffsorte der vorgebbaren Kunststoffanteile und der Polarität der zu extrahierenden Stoffe. Dadurch kann eine hohe Extraktionsrate erreicht werden, ohne dass der Kunststoff angelöst wird und beim Extrahieren verklebt.

Für die Berechnung des Oktanol/Wasser-Verteilungskoeffizienten $K_{OW}$ kann z.B. die Software EPI-Suite der US Environmental Protection Agency (www.epa.gov) verwendet werden. Aus einer chemischen Struktur wird die SMILES Notation generiert und an die EPI-Suite Software übergeben. Diese berechnet dann den entsprechenden Oktanol/Wasser-Verteilungskoeffizienten $K_{OW}$. Die berechneten Oktanol/Wasser-Verteilungskoeffizienten $K_{OW}$ werden abschließend auf ein Molekulargewicht von 1000 g/mol genormt. Der Oktanol/Wasser-Verteilungskoeffizient $K_{OW}$ von Polymeren berechnet sich aus einem Kettensegment mit einem Molekulargewicht, das dem Wert von 1000 g/mol am nächsten ist.

Aus der Polarität des Extraktionsmittels (OM), der Polarität der Teilchen des aufzubereitenden Kunststoffs (P) und zu der Polarität er zu extrahierenden Stoffe (M) lässt sich ein Verteilungskoeffizient $K_{P,M}$ bestimmen wie folgt:

$$K_{P,M} = \frac{\left(logP_{O/W}^{P} - logP_{O/W}^{OM}\right)^2}{\left(logP_{O/W}^{OM} - logP_{O/W}^{M}\right)^2}$$

wobei das Zeichen P für die Polarität des entsprechenden Stoffes P bzw. OM bzw. M ausgedrückt als Oktanol/Wasser-Verteilungskoeffizienten steht.

Dieser Verteilungskoeffizient $K_{P,M}$ liegt vorzugsweise für die zu extrahierenden Stoffe im Bereich von < 1. Vorzugsweise liegt auch der Abstand zwischen dem Logarithmus $log(P^{P}_{O/W})$ und dem Logarithmus $log(P^{OM}_{O/W}) > 5$. Dadurch lässt sich eine hohe Extraktionsgüte bei geringen Extraktionszeiten erreichen.

Die Extraktionszeit $t_{ex}$ von niedermolekularen Stoffen aus mikronisierten Teilchen von einem Kunststoff bei einem Referenz-Molekulargewicht der niedermolekularen Fraktion von 200 g/mol ergibt sich beispielsweise aus der kleinsten Teilchendimension (d in cm$^2$) und dem Diffusionskoeffizienten $D_P$, der sich aus dem Polymertyp, beschrieben durch dessen Glasübergangstemperatur ($T_g$ in °C), der Temperatur (T in K) und dem Molekulargewicht ergibt wie folgt:

$$t_{ex} = 1/6 * (d/2)^2 / D_P$$

und

$$D_P = 10^4 * EXP\left[(-0,06 * T_g + 2) - 0,1351 * 200^{2/3} + 0,003 * 200 - 10545/T\right] \text{ in cm}^2/\text{s}.$$

Damit beträgt die Extraktionszeit für typische Kontaminanten aus recycelten Polypropylen-Teilchen (zylindrische Filamente) mit 80 μm Durchmesser z.B. bei einer Glasübergangstemperatur von $T_{G,PP}$ = -40°C und dem Molekulargewicht von MW = 200 Dalton sowie Extraktionstemperatur T = 373K (100°C) mit dem Zwischenschritt

$$D_P = 10^4 * EXP\left[(-0.06 * -40 + 2) - 0.1351 * 200^{2/3} + 0.003 * 200 - 10545/373\right] \text{ in cm}^2/\text{s} = 7,7e\text{-}9 \text{ cm}^2/\text{s},$$

also

$$t_{EX, PP}\ (d=80\mu m) = 1/6 * 0,004^2 / 7,7e\text{-}9 = 5,8 \text{ Minuten}.$$

Je kleiner die durchschnittlichen Teilchengrößen sind, desto kürzer können die Extraktionszeiten gewählt werden.

Weitere Details und vorteilhafte Ausprägungen der Erfindung ergeben sich aus der folgenden Figurenbeschreibung.

Dabei zeigen

**Fig. 1** schematische Darstellung der Verfahrensschritte Extrusion, Zerkleinerung und Fluidisierung eines thermoplastischen Wertstoffstroms gemäß einem Ausführungsbeispiel des erfindungsgemäßen Verfahrens;

**Fig. 2** bildliche Erläuterung eines Trennschritts zur Trennung vorgebbarer Kunststoffanteile aus einem zerkleinerten und fluidisierten Wertstoffstrom mithilfe eines senkrecht angelegten Kraftfeldes, wobei **Figur 2a** eine Trennungsvorrichtung im Längsschnitt und die **Figuren 2b und 2c** jeweils einen Querschnitt des in Fig. 2a angegebenen Trennschritts entlang der Schnitte A-A bzw. B-B zeigen;

**Fig. 3** ein erstes Ablaufschema eines Ausführungsbeispiels des erfindungsgemäßen Verfahrens;

**Fig. 4** ein zweites Ablaufschema eines Ausführungsbeispiels des erfindungsgemäßen Verfahrens sowie

**Fig. 5** beispielhafte Querschnitte extrudierter Stränge oder Filme.

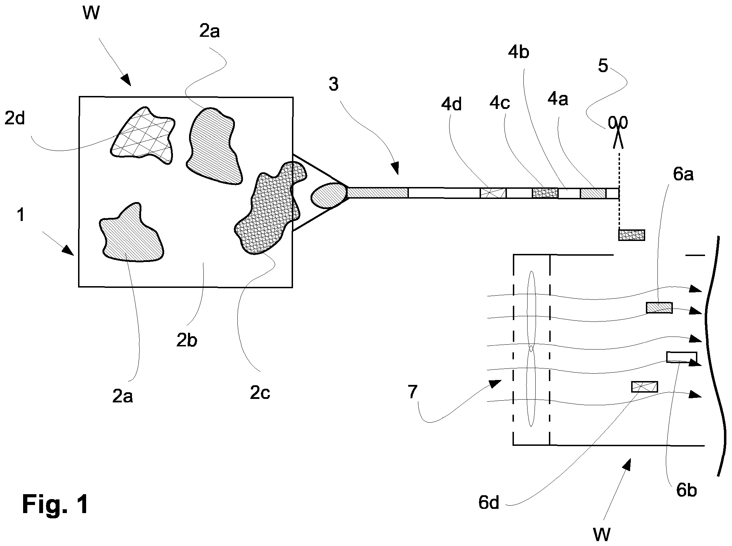

Fig. 1 zeigt schematisch die Verarbeitung eines thermoplastischen Wertstoffstrom W aus thermoplastischen Kunststoffmaterialien zur Wiedergewinnung von vorgegebenen Kunststoffanteilen aus dem Wertstoffstrom W, der hierfür zunächst in einer Schmelz- und Extrusionsvorrichtung 1 aufgeschmolzen wird. Der Wertstoffstrom umfasst in dem dargestellten Beispiel verschiedene thermoplastische, nicht mischbare Kunststoffe a, b, c, d. Diese liegen in aufgeschmolzenem Zustand phasensepariert in Phaseninseln 2a, 2b, 2c, 2d vor. Die Ausmessungen der Phaseninseln 2a, 2b, 2c, 2d ergeben sich im Wesentlichen aus der Größe und Zusammensetzung der einzelnen Bestandteile des zugeführten Wertstoffstroms W. Bei vorwiegend großteiligen Bestandteilen des Wertstoffstroms W sind die Phaseninseln 2a, 2b, 2c, 2d größer, z.B. im Bereich von mm. Bei kleinteiligen Bestandteilen, insbesondere bei z.B. Mehrschicht-Folien mit geringen Schichtstärken von wenigen $\mu$ sind die Phaseninseln entsprechend kleiner. Die Ausmessungen der Phaseninseln in diesem Beispiel unterschreitet 100 $\mu$m nicht.

Der aufgeschmolzene Wertstoffstrom W wird durch eine nicht näher dargestellte Extruderschnecke zu einem durchgehenden Strang 3 extrudiert, wobei der Durchmesser des Strangs 3 kleiner ist als die kleinsten Abmessungen der einzelnen Phaseninseln 2a - 2d. Da es sich im Beispiel der Fig. 1 um einen thermoplastischen Wertstoffstrom W nicht näher bekannter Zusammensetzung handelt, ist der gewählte Extrusionsquerschnitt zweckmäßig ein kreisrunder Querschnitt mit einem Durchmesser von bspw. 20 $\mu$m. Es können je nach Bedarf auch andere Extrusionsquerschnitte und/oder Durchmesser gewählt werden.

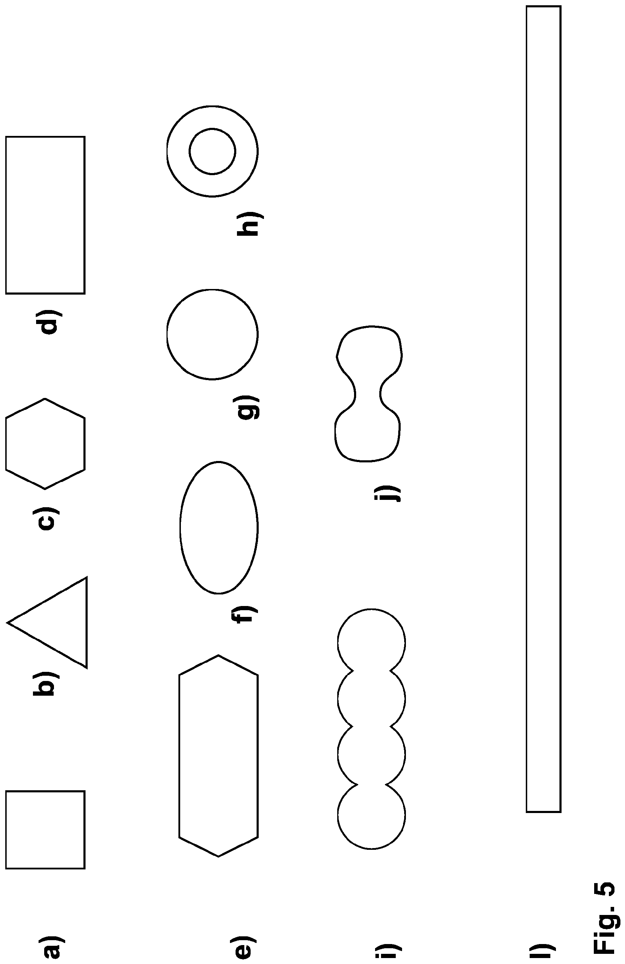

Vorteilhafte Querschnittsformen könnten z.B. gemäß den Fig. 5 a) bis k) ausgestaltet sein. Die Querschnittsform kann beispielsweise polygonal, insbesondere rechteckig (Fig. 5a und Fig. 5k), dreieckig (Fig. 5b), wabenförmig bzw. hexagonal mit gleichseitigen Kanten (Fig. 5c) oder unterschiedlich langen Kanten (Fig. 5e) oder rechteckig mit unterschiedlich langen Kanten (Fig. 5d) gewählt sein. Die Querschnitte könnten auch kreisrund (Fig. 5g), oval (Fig. 5f) oder hohlzylindrisch (Fig. 5h) gewählt sein. Die Querschnittsform kann auch als Kombination bzw. Verbindung von mehreren Grundformen ausgestaltet sein wie z.B. als Verbindung von vier Kreisquerschnitten gemäß Fig. 5i oder als Verbindung zweier Kreisformen mit einem dazwischen befindlichen Steg (Fig.5j).

Der extrudierte Strang 3 umfasst einzelne Strangabschnitte 4a, 4b, 4c, 4d unterschiedlicher Kunststoffsorten. Der Strang 3 wird bei oder nach Erkalten durch eine mechanische Trennungsvorrichtung 5 in einzelne Strangabschnitte bzw. Filamente 6a, 6b, 6d auf eine vorgegebene Länge geteilt und dadurch zerkleinert. Bei der mechanischen Trennungsvorrichtung 5 kann es sich z.B. um ein schnell rotierendes oder oszillierendes Messer handeln. Die Filamente 6a, 6b, 6d haben bspw. eine durchschnittliche Länge von 80 $\mu$m. Bei der mechanischen Trennung bricht der extrudierte Strang 3 bevorzugt an den Phasengrenzen bzw. den stirnseitigen Grenzflächen der Kunststoffstrangabschnitte, da eine Phasengrenze eine natürliche Sollbruchstelle darstellt.

Die abgetrennten Filamente 6a - 6d werden danach in eine Fluidisierungsvorrichtung 7 gebracht. Bevorzugt fallen die abgetrennten Filamente direkt in die Fluidisierungsvorrichtung 7. In der Fluidisierungsvorrichtung 7 werden die Filamente 6a - 6d in ein als Fluidisierungsmittel dienendes Fluid, insbesondere in einen laminar strömenden Flüssigkeits- oder Gasstrom, bspw. einem aus der Umgebung durch ein Gebläse angesaugten Luftstrom, eingebracht und dadurch fluidisiert. Da die Filamente 6a - 6d fadenförmig und damit anisotrop ausgebildet sind, richten sie sich im Strömungsfeld des Fluids in ihrer Vorzugsrichtung, d.h. entlang ihrer Längsachse nach der Strömungsrichtung des Fluidstroms aus. Das Strömungsfeld des strömenden Fluids bleibt dabei im Wesentlichen laminar.

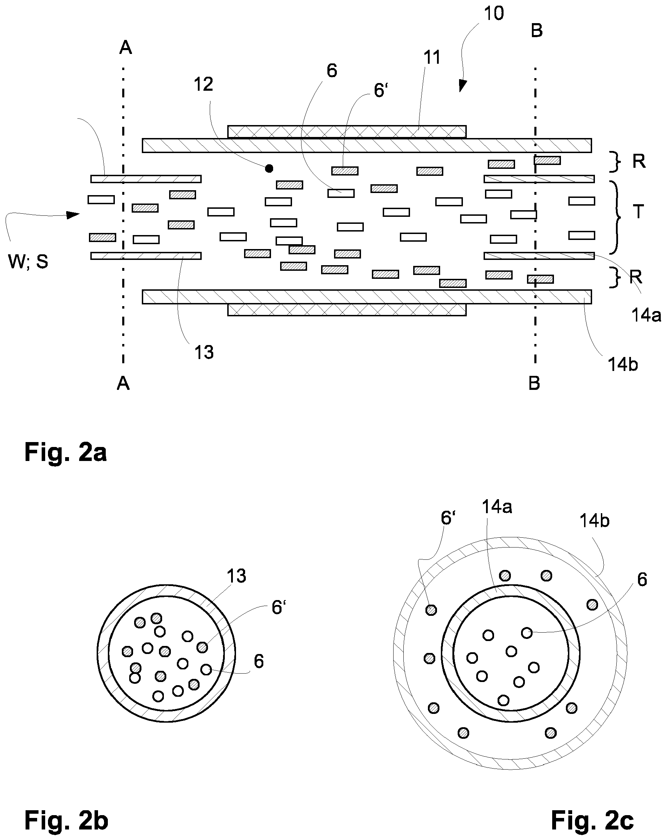

Die Filamente 6a - 6d werden mit dem Fluidstrom in eine erste Trennungsvorrichtung zur Durchführung eines ersten Trennschrittes transportiert. Bei der ersten Trennungsvorrichtung, die in Figur 1 nicht gezeigt ist, kann es sich z.B. um eine Trennungsvorrichtung 10 handeln, wie in Fig. 2 gezeigt.

Fig. 2a zeigt eine vorteilhafte Trennungsvorrichtung 10 zur Durchführung des (ersten) Trennschrittes des erfindungsgemäßen Verfahrens in einem Längsschnitt. Die Trennungsvorrichtung 10 der Figur 2 umfasst eine von einem hier als Elektromagnet ausgebildeten Kraftfelderzeuger 11 umgebene ring- bzw. rohrförmige Reaktionskammer 12. Über ein Zuleitungsrohr 13 wird ein wie in Fig. 1 beschriebener fluidisierter Stoffstrom S eingebracht. Der Stoffstrom S enthält die in dem Fluidisierungsmittel, bspw. einem Gasstrom, fluidisierten Filamente 6, 6' derselben Kunststoffsorte, wobei die Filamente 6' magnetische Markerpartikel, hier Magnetit, aufweisen und die Filamente 6 frei von solchen Markern sind. In der Trennungsvorrichtung 10 werden die Filamente 6' von den Filamenten 6 getrennt. Bei den Filamenten 6' handelt es sich daher um die vorgegebenen bzw. vorgebbaren Kunststoffanteile des Wertstoffstroms W, welche sich von den übrigen (Kunststoff-)Anteilen des Wertstoffstroms W durch die vorhanden Markerpartikel unterscheiden.

Der Stoffstrom S bewegt sich in der Blattebene der Fig. 2a horizontal von links nach rechts. Die Reaktionskammer 12 weist einen gegenüber dem Zuleitungsrohr 13 größeren Durchmesser mit bspw. kreisrundem Querschnitt auf. Der als Elektromagnet eingerichtete Kraftfelderzeuger 11 erzeugt in diesem Fall ein magnetisches Kraftfeld, dessen Feldlinien im Wesentlichen senkrecht zur Strömungsrichtung des Stoffstromes S gerichtet sind und in welchem die magnetische Feldstärke radial ansteigt. In Abhängigkeit ihrer magnetischen Eigenschaften wandern die im Stoffstrom S befindlichen Filamente 6 und 6' stärker oder weniger stark nach außen. Die aufgrund der magnetischen Markerpartikel magnetisierbaren Filamente 6' wandern aufgrund des Magnetfeldes nach radial außen und sammeln sich dadurch am äußeren Umfangsbereich der Reaktionskammer 12. Die nicht magnetischen bzw. kaum magnetischen Filamente 6 verändern ihre Querschnitts-Lage nicht und verbleiben innerhalb des Querschnitts des Zuleitungsrohrs und damit im radial inneren Bereich der Reaktionskammer 12.

Nach der bzgl. der Querschnittslage selektiven Ortsveränderung der Filamente 6 und 6' können diese über zwei konzentrisch angeordnete Ableitungsrohre 14a und 14b abgeführt und als zwei voneinander separierte Stoffströme, nämlich einem die vorgebbaren Kunststoffanteile bzw. Filamente 6' umfassenden Recyclatstrom R sowie einen die übrigen Stoffstromanteile umfassenden Teilstrom T, abtransportiert und gegebenenfalls weiteren Verfahrensschritten unterzogen werden. Das innere Ableitungsrohr 14a kann dabei auch als (Ring-)blende verstanden werden.

In der Querschnittsdarstellung der Fig. 2b ist der Stoffstrom S vor Eintritt in die Reaktionskammer, hier auf Höhe des Schnitts A-A in Fig. 2a zu sehen. Die Filamente 6' mit Marker und die Filamente 6 ohne Marker liegen dabei zufällig gemischt vor.

In der Querschnittsdarstellung der Fig. 2c ist der in einen Recyclatstrom R und einen Teilstrom T aufgeteilte Stoffstrom S nach bzw. bei Austritt aus der Reaktionskammer 12, hier auf Höhe des Schnitts B-B in Fig. 2a gezeigt. Die Filamente 6' mit Marker liegen bzgl. ihrer Querschnittslage radial außen vor (Recyclatstrom R). Die Filamente 6 ohne Marker liegen im Vergleich zu Fig. 2b im Wesentlichen in unveränderter Querschnittslage vor (Teilstrom T).

Der in den Figuren 2, 2a und 2b dargestellte Stoffstrom S kann zuvor bereits einem oder mehreren Trennschritten unterworfen worden sein, um die Filamente 6, 6' der gewünschten Kunststoffsorte von den Filamenten anderer Kunststoffsorten zu trennen. Ebenso kann der ausströmende (innere) Teilstrom T weiteren Trennschritten unterzogen werden, um eine möglichst weitgehende Separierung der Filamente 6' mit Marker und der Filamente 6 ohne Marker zu erzielen.

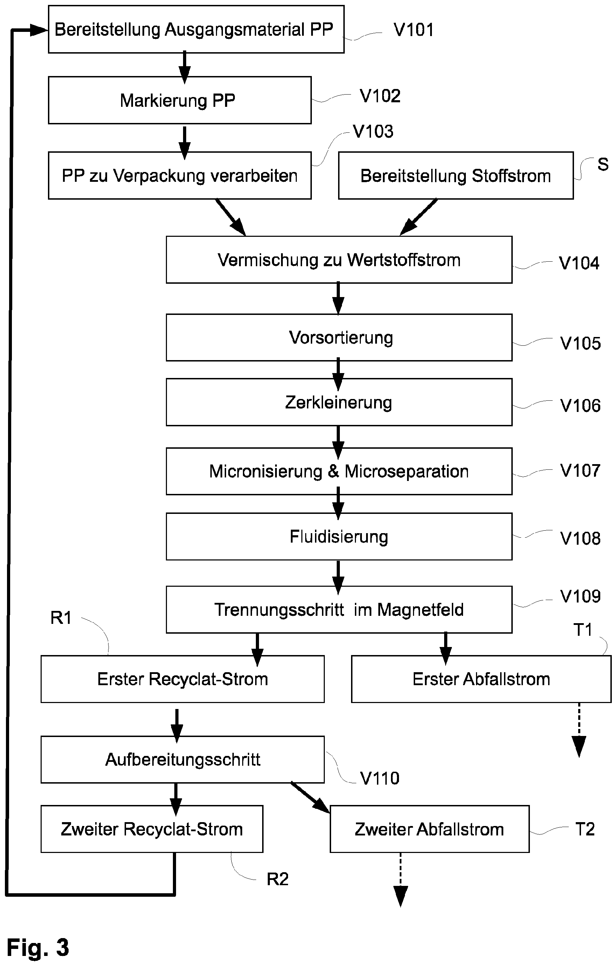

Fig. 3 zeigt ein erstes Ablaufschema eines Ausführungsbeispiels gemäß einem erfindungsgemäßen Verfahren. Dabei wird ein Ausgangsmaterial, wie hier z.B. Polypropylen (PP) für Nahrungsmittelverpackungen, bereitgestellt Schritt V101. Dieses Ausgangsmaterial soll nach bestimmungsgemäßem Gebrauch als Nahrungsmittelverpackung wiedergewonnen und zum gleichen Einsatzzweck verarbeitet werden.

Das Ausgangsmaterial wird dazu mit Primärmarkerpartikeln, hier bspw. in Form von Magnetit ($Fe_3O_4$), das mit einem Durchmesser $<10\mu m$ und einer Einsatzmenge von 0,1 Gew.-% verbunden, Schritt V102. Das Ausgangsmaterial kann darüber hinaus ebenfalls (in der Fig. 3 nicht dargestellt) mit Sekundärmarkerpartikeln in Form von Bentonit mit einem Durchmesser $<10\mu m$ und einer Einsatzmenge von 0,1 Gew.-% markiert werden. Das Ausgangsmaterial wird dann zu einer Verpackung für Lebensmittel, hier einer Monomaterial-Schale im Spritzguss, verarbeitet, Schritt V103. Nach dem bestimmungsgemäßen Gebrauch wird das verbrauchte Verpackungsmaterial zusammen mit anderen Bestandteilen eines Stoffstroms S zu einem undefinierten Abfall- bzw. Wertstoffstrom W zusammengeführt, Schritt V104. Bei dem Abfall- bzw. Wertstoffstrom handelt es sich z.B. um den Kunststoffabfall des gelben Sacks. Der undefinierte Wertstoffstrom W kann zunächst vorsortiert werden, um bspw. nichtthermoplastische Bestandteile herauszutrennen, Schritt V105, so dass ein thermoplastischer Wertstoffstrom aus reinen thermoplastischen Kunststoffen erhalten wird. Anschließend wird der so vorsortierte Wertstoffstrom z.B. über eine Schredderanlage mechanisch grob zerkleinert, Schritt V106. Durch Schmelzextrusion und anschließendes Zerkleinern der extrudierten Stränge oder Filme wird der thermoplastische Wertstoff-Strom W in Form von fadenförmigen Filamenten mit einem durchschnittlichen Durchmesser von bspw. 80 $\mu m$ durch periodisches Abschneiden bzw. Abschaben an einem Extruder-Auslass micronisiert und microsepariert, Schritt V107. Anstelle des Abschabens ist auch eine Trennung mittels Wasserstrahl möglich. Die Filamente werden anschließend in einem Fluidisierungsmittel, hier Wasser, fließfähig gemacht, Schritt V108. Der fluidisierte Wertstoffstrom wird dann einem Trennschritt in einer Trennungsvorrichtung unterzogen, hier der Trennung in einem bzw. durch ein Magnetfeld, Schritt V109. Der Wertstoffstrom W wird dadurch in zwei Stoffströme geteilt, nämlich einen ersten Recyclatstrom R1 und einen ersten Teilstrom T1, wie z.B. in Fig. 2 beschrieben. Der erste Recyclatstrom R1 enthält das über die Primärmarkerpartikel markierte Polypropylen. Der erste Teilstrom T1 enthält alle übrigen Bestandteile des ursprünglichen Wertstoffstroms und umfasst insbesondere keine Bestandteile mit Primärmarkerpartikeln.

Der erste Teilstrom T1 kann einer hier nicht näher ausgeführten, weiteren Behandlung oder Verwendung zugeführt werden. Insbesondere wenn der erste Teilstrom T1 noch Wertstoffe enthält, können diese über weitere Trennschritte herausgefiltert werden.

Der erste Recyclat-Strom R1 wird sodann einem als Extraktion ausgebildeten Aufbereitungsschritt unterzogen, Schritt V110. Dabei werden die mit dem PP verbundenen Primärmarkerpartikel und andere Kontaminanten aus dem PP entfernt. Dabei liegt die Extraktionszeit für typische Kontaminanten von wiedergewonnenem PP mit Filamenten mit einem Durchmesser von 80 $\mu$m Durchmesser bei 100°C typischerweise bei wenigen Minuten. Konkret wird hier eine Wasserdampfdestillation bei 100°C für 10 Minuten angewandt. Durch den Aufbereitungsschritt wird der erste Recyclatstrom R1 in einen zweiten Recyclatstrom R2 und einen zweiten Teilstrom T2 aufgeteilt.

Aus dem zweiten Recyclatstrom R2 kann das so aufbereitete PP aus dem Fluidisierungsmittel herausgefiltert werden und dann einer erneuten Verwendung als Lebensmittelverpackung zugeführt werden. Auch das Fluidisierungsmittel kann wiederverwendet werden. Auch der zweite Teilstrom T2 kann weiterbehandelt werden.

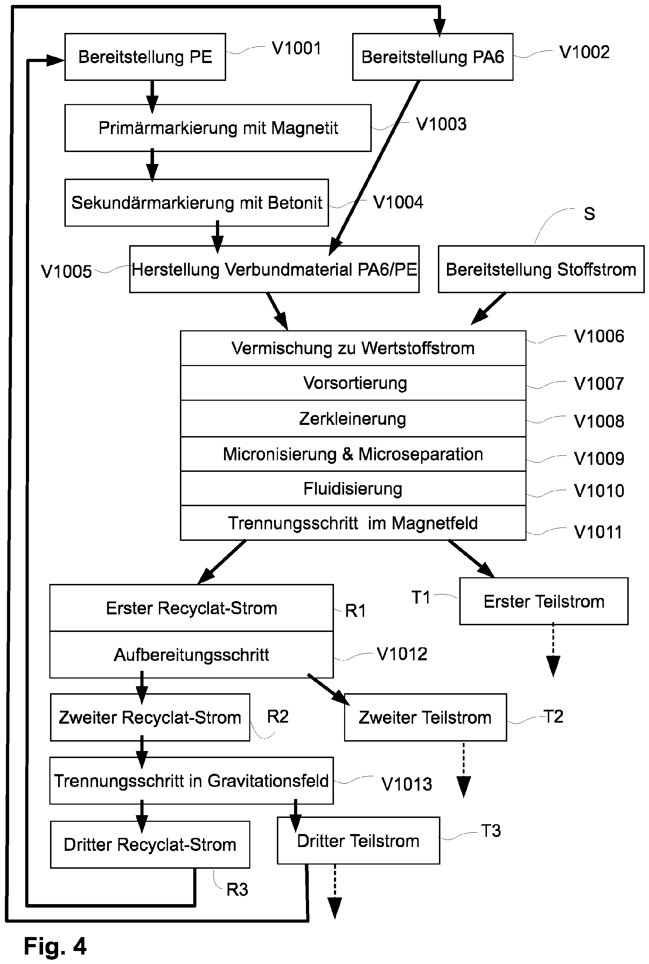

Fig. 4 zeigt ein zweites Ablaufschema eines Ausführungsbeispiels des erfindungsgemäßen Verfahrens. Dabei wurden mehrere Ausgangsmaterialien, hier Polyethylen (PE) und Polyamid (PA6), die mit Schritten V1001 und V1002 bereitgestellt wurden, durch Kaschieren zu einem Verbundmaterial PA6/PE verbunden. Ein solches Verbundmaterial findet z.B. Einsatz als Deckelfolie für Schalen von Lebensmitteln. Die Ausgangsmaterialien Polyethylen (PE) und Polyamid PA6 soll nach bestimmungsgemäßem Gebrauch wiedergewonnen und zum gleichen Einsatzzweck verarbeitet werden (können).

Während oder vor der Verbindung zu einem Verbundmaterial wird das PA6 mit Primärpartikeln (in Fig. 4 nicht dargestellt) und PE mit Primärmarkerpartikeln und Sekundärmarkerpartikeln versehen, Schritte V1003 und V1004. Als Primärmarkerpartikel wird hier Magnetit mit einer Einsatzmenge von 0,1 Gew.-% und einem Durchmesser <5 $\mu$m verwendet. Als Sekundärmarkerpartikel wird organisch modifiziertes Bentonit mit einem Durchmesser < 5 $\mu$m bei einer Einsatzmenge von 0,1 Gew.-% verwendet.

Das zweifach markierte PE wird dann mit dem einfach markierten PA6 zu einem Verbundmaterial für Verpackungszwecke verbunden, Schritt V1005. Nach dem bestimmungsgemäßen Gebrauch wird das benutzte Verbundmaterial zusammen mit weiteren Bestandteilen eines Stoffstroms S zu einem undefinierten Abfall- bzw. Wertstoffstrom W zusammengeführt, Schritt V1006. Der undefinierte Wertstoffstrom W kann auch hier wieder vorsortiert werden, um bspw. alle nicht-thermoplastischen Bestandteile herauszutrennen und einen rein thermoplastischen Wertstoffstrom bereitzustellen, Schritt V1007. Anschließend wird der so vorsortierte Wertstoffstrom mechanisch grob in Flocken (Flakes) zerkleinert, Schritt V1008. Durch Schmelzextrusion und anschließendes Zerkleinern der extrudierten Stränge wird der thermoplastische Wertstoff-Strom W zu fadenförmigen Filamenten mit einem Durchmesser von 80 $\mu$m micronisiert, Schritt V1009. Bei diesem Vorgang werden die ursprünglich verbundenen Kunststoffsorten gleichzeitig voneinander separiert, so dass neben sonstigen Filamenten sortenreine Filamente aus PA6 und sortenreine Filamente aus PE vorliegen. Die Filamente werden in Wasser fluidisiert, Schritt V1010.

Der fluidisierte Wertstoffstrom wird in einer Trennungsvorrichtung einem Trennschritt anhand der Eigenschaften der Primärmarkerpartikel unterzogen, hier also der Trennung in einem senkrecht zur Strömungsrichtung angelegten Magnetfeld, Schritt V1011. Dadurch wird der Wertstoffstrom W in einen ersten Recyclatstrom R1 und einen ersten Teilstrom T1 geteilt, wobei zwei konzentrische Ableitungsrohre bzw. eine Ringblende wie unter Fig. 2 beschrieben, zum Einsatz kommt.

Der erste Recyclatstrom R1 enthält die wiederzugewinnenden Kunststoffanteile, hier das gekennzeichnete PE und PA6. Der erste Teilstrom T1 enthält alle übrigen Bestandteile des ursprünglichen Wertstoffstroms.

Der erste Teilstrom T1 kann einer weiteren Behandlung unterzogen oder einer Wiederverwertung zugeführt werden. Insbesondere wenn der erste Teilstrom T1 noch weitere Wertstoffe enthält, kann dieser weiteren Verfahrensschritten zum Recyceln der Wertstoffe unterzogen werden.

Der erste Recyclat-Strom R1 wird einem als Extraktion ausgebildeten Aufbereitungsschritt unterzogen, Schritt V1012. Dabei werden die im PE und PA6 gebundenen Primärmarkerpartikel und/oder die durch den ursprünglichen Verwendungszweck (Lebensmittelverpackung) enthaltenen Kontaminanten (z.B. Druckfarbenbestandteile) entfernt. Dies erfolgt bspw. durch Extraktion mit Hilfe von superkritischem $CO_2$. Die Extraktionsdauer beträgt dabei typischerweise ca. 10 Minuten. Durch den Aufbereitungsschritt wird der erste Recyclat-Strom R1 in einen zweiten Recyclatstrom R2 und einen zweiten Teilstrom T2 aufgeteilt.

Der zweite Recyclatstrom R2 wird einem zweiten Trennungsschritt unterzogen. Der zweite Trennungsschritt V1013 umfasst die Trennung über ein Gravitationsfeld. Dabei wird der zweite Recyclatstrom R2 in eine Zentrifuge gegeben, so dass die PA6-Filamente von den PE-Filamenten aufgrund der unterschiedlichen Dichten der Filamente von PA6 und PE in einen dritten Recyclatstrom R3 und einen dritten Teilstrom T3 aufgeteilt werden.

Aus dem dritten Recyclatstrom R3 kann das darin enthaltene PE herausgefiltert und einer erneuten Verwendung zugeführt werden. Ebenso kann das im Teilstrom T3 enthalten PA6 aus dem Teilstrom T3 herausgefiltert werden und einer erneuten Verwendung zugeführt werden. Das Fluidisierungsmittel kann dabei vorteilhaft zur Ressourcenschonung wiederverwendet werden, indem die Flüssigkeit oder das Gas bspw. gefiltert wird.

Die vorbeschriebenen Ausführungsformen geben lediglich erläuternde Beispiele des erfindungsgemäßen Verfahrens wieder. Eine Kombination dieser oder ähnlicher Merkmale der beschriebenen Ausführungsformen können zu komplexeren Verfahren kombiniert werden, ohne den Rahmen der Erfindung zu verlassen. Durch das erfindungsgemäße Verfahren ist es ganz allgemein möglich, vorgebbare Bestandteile aus undefinierten Wertstoffströmen herauszufiltern. Durch wiederholten Einsatz der Verfahrensschritte des erfindungsgemäßen Verfahrens auf einen un- oder vorsortierten Wertstoffstrom oder Teilströme davon kann das Verfahren auch eingesetzt werden, um eine Vielzahl von vorgebbaren Bestandteilen aus dem Wertstoffstrom abzutrennen und wiederzugewinnen.

**Bezugszeichenliste:**

| | |
|---|---|
| W | Wertstoffstrom |
| R(1,2,3) | Recyclat-Strom (1,2,3) |
| S | Stoffstrom (Abfallstrom oder Wertstoffstrom oder Recyclat-Strom) |
| T(1,2,3) | Teilstrom (1,2,3) |

| | |
|---|---|
| 1 | Schmelz- und Extrusionsvorrichtung |
| 2(a-d) | Phaseninseln einer Kunststoffsorte a,b,c,d |
| 3 | Kunststoffstrang |
| 4(a-d) | Kunststoffstrangabschnitte (einer Kunststoffsorte a,b,c,d) |
| 4' | mit Markern markierte Kunststoffstrangabschnitte |
| 5 | Trennungsvorrichtung |
| 6(a-d) | Filamente (einer Kunststoffsorte a,b,c,d) |
| 6' | mit Markern markierte Filamente |
| 7 | Fluidisierungsvorrichtung |
| 10 | Trennungsvorrichtung |
| 11 | Kraftfelderzeuger |
| 12 | Reaktionskammer |
| 13 | Zuleitungsrohr |
| 14a | erstes Ableitungsrohr |
| 14b | zweites Ableitungsrohr |

| | |
|---|---|
| V101, V102, V103, | Verfahrensschritte 101,102,103... |

**Patentansprüche**

1. Verfahren zur sortenreinen Wiedergewinnung von vorgebbaren Kunststoffanteilen eines bestimmten Kunststoffmaterials oder einer bestimmten Kunststoffzusammensetzung aus einem un- oder vorsortierten Wertstoffstrom (W), wobei die vorgebbaren Kunststoffanteile von anderen Kunststoffanteilen desselben Kunststoffmaterials bzw. derselben Kunststoffzusammensetzung anhand zumindest eines bei der Herstellung und/oder Verwendung des Kunststoffs eingebrachten Primärmarkers unterscheidbar gemacht worden sind (V102; V1003) und wobei das Verfahren zumindest einen Trennschritt (V109; V1011) umfasst, bei dem der Wertstoffstrom (W) anhand eines ersten Trennungskriteriums aufgetrennt wird in einen ersten, den vorgebbaren Kunststoffanteil umfassenden Recyclat-Strom (R1) und einen ersten Teilstrom (T1), wobei das Trennungskriterium zumindest teilweise auf Eigenschaften des Primärmarkers basiert, und der Wertstoffstrom (W) thermoplastische Kunststoffe umfasst oder bevorzugt zumindest im Wesentlichen aus thermoplastischen Kunststoffen besteht und durch Schmelzextrusion zu thermoplastischen Strängen (3) oder Filmen extrudiert und die Stränge oder Filme zu Teilchen, insbesondere Strangabschnitten bzw. Filmabschnitten, zerkleinert (V107; V1009) werden, **dadurch gekennzeichnet, dass** das Extrudieren und Zerkleinern (V107; V1009) vor dem ersten Trennschritt erfolgt, und die Teilchen im Anschluss an das Extrudieren und Zerkleinern (V107; V1009) durch Einbringung in ein strömendes Fluidisierungsmittel fluidisiert (V108; V1010) werden.

2. Verfahren nach Anspruch 1, **dadurch gekennzeichnet, dass** der Wertstoffstrom (W) vor dem Trennschritt (V109; V1011, V1013) durch Schmelzextrusion zu thermoplastischen Strängen oder Filmen mit einer vorgegebenen Form, insbesondere einer vorgegebenen Querschnittsform, extrudiert und die extrudierten Stränge (3) oder Filme zu Teilchen mit einer vorgegebenen Länge, insbesondere zu Strangabschnitten oder Filmabschnitten, zerkleinert (V107; V1009) werden.

3. Verfahren nach Anspruch 2, wobei die Teilchen bevorzugt und zumindest im Wesentlichen gleichförmig sind.

4. Verfahren nach einem der vorhergehenden Ansprüche, **dadurch gekennzeichnet, dass** die Teilchen in ein strömendes Fluidisierungsmittel mit laminarer Strömung eingebracht und transportiert werden (V108; V1010), wobei das Fluidisierungsmittel anschließend insbesondere als Schwebebett oder als Wirbelschicht, ausgebildet wird.

5. Verfahren nach einem der vorhergehenden Ansprüche, **dadurch gekennzeichnet, dass** das Fluidisierungsmittel Wasser, ein Lösemittel, Luft, ein Inert- oder Edelgas und/oder eine Mischung davon umfasst.

6. Verfahren nach einem der vorhergehenden Ansprüche, **dadurch gekennzeichnet, dass** die Teilchen in mindestens einer Dimension eine maximale Erstreckung kleiner als 1000 $\mu$m aufweisen.

7. Verfahren nach einem der vorhergehenden Ansprüche, **dadurch gekennzeichnet, dass** die Teilchen eine anisotrope Geometrie aufweisen, insbesondere mit einer Wadell-Sphärizität von kleiner 0,8, bevorzugt kleiner 0,75 oder besonders bevorzugt kleiner 0,7 und/oder einem Seitenverhältnis von kleiner 0,8, bevorzugt kleiner 0,7 oder besonders bevorzugt kleiner 0,5.

8. Verfahren nach einem der vorhergehenden Ansprüche, **dadurch gekennzeichnet, dass** die Extrusion der Stränge oder Filme und/oder deren Zerkleinerung (V107; V1009) zu Teilchen und/oder deren Fluidisierung (V108; V1010) in dem Fluidisierungsmittel kontinuierlich erfolgt.

9. Verfahren nach einem der vorhergehenden Ansprüche, **dadurch gekennzeichnet, dass** die Teilchen nach ihrer Fluidisierung homogen in dem Fluidisierungsmittel verteilt sind.

10. Verfahren nach einem der vorhergehenden Ansprüche, **dadurch gekennzeichnet, dass** in die vorgebbaren Kunststoffanteile bei der Herstellung und/oder Verwendung des Kunststoffs Markerpartikel eingebracht werden (V102; V1003; V1004), so dass die vorgebbaren Kunststoffanteile gegenüber gleichartigen Kunststoffanteilen ohne Markerpartikel anhand der Materialeigenschaften in einem Kraftfeld, insbesondere der Dichte-Eigenschaften und/oder elektrischer Ladungseigenschaften und/oder magnetischer Eigenschaften und/oder elektromagnetischer, insbesondere optischer, Eigenschaften unterscheidbar sind.

11. Verfahren nach einem der vorhergehenden Ansprüche, **dadurch gekennzeichnet, dass** die vorgebbaren Kunststoffanteile einen Sekundärmarker und ggf. weitere Marker umfassen und/oder dass das erste oder wenigstens ein weiteres Trennungskriterium auf Eigenschaften der Primärmarker und/oder der Sekundärmarker und/oder dem Kunststoffanteil natürlich anhaftender Eigenschaften basiert.

12. Verfahren nach einem der vorhergehenden Ansprüche, **dadurch gekennzeichnet, dass** die Kunststoffmaterialien oder Kunststoffzusammensetzungen des Wertstoffstroms (W) bei der Schmelzextrusion und/oder der anschließenden Zerkleinerung zu Teilchen microsepariert (V107; V1009) werden, wobei die Microseparierung bevorzugt durch das Extrudieren des Wertstoffstroms (W) zu Strängen oder Filmen mit einem vorgegebenen Durchmesser oder einer vorgegebenen Dicke erfolgt, wobei der Durchmesser oder die Dicke unterhalb einer Größe von beim Aufschmelzen in der Schmelze als sortenrein vorliegenden Phaseninseln nicht mischbarer Polymere liegt.

13. Verfahren nach einem der vorhergehenden Ansprüche, **dadurch gekennzeichnet, dass** das Verfahren einen Aufbereitungsschritt (V110; V1012) umfasst, bei welchem Markerpartikel und/oder andere Partikel, insbesondere unerwünschte Kontaminierungen, aus den extrudierten Teilchen ausgesondert werden, insbesondere durch Extraktion oder Emission, wobei das Fluidisierungsmittel bevorzugt auch als Extraktionsmittel dient und/oder das Verfahren mehrere gleichartige oder unterschiedliche, nacheinander ausgeführte Trennschritte zur Auftrennung des Wertstoffstroms (W) anhand bestimmter Trennkriterien umfasst und/oder dass der Wertstoffstrom (W) einen oder mehrere Trennschritte (V109; V1011; V1013) mehrfach durchläuft.

14. Verfahren nach einem der vorhergehenden Ansprüche, **dadurch gekennzeichnet, dass** das Verfahren mindestens einen weiteren Trennschritt (V1013) umfasst, bei dem ein Recyclatstrom (R1) anhand eines zweiten Trennungskriteriums in einen zweiten Recyclat-Strom (R2) und einen zweiten Teilstrom (T2) aufgetrennt wird, wobei der weitere Trennschritt (V1013) als Trennungskriterium Eigenschaften eines Sekundärmarkers und/oder den Kunststoffanteilen inhärente Eigenschaften nutzt.

15. Verfahren nach einem der vorhergehenden Ansprüche, **dadurch gekennzeichnet, dass** die fluidisierten Teilchen zur Abtrennung der vorgebbaren Kunststoffanteile zumindest einem Kraftfeld ausgesetzt werden (V109; V1011; V1013), wobei das Kraftfeld insbesondere ein Gravitationsfeld, ein magnetisches Feld, ein elektrostatisches Feld und/oder ein elektromagnetisches Feld ist, wobei bevorzugt mehrere Kraftfelder miteinander kombiniert, insbesondere überlagert und/oder hintereinander angeordnet sind und eine Strömungsrichtung des Fluidisierungsmittels mit den darin fluidisierten Teilchen bevorzugt senkrecht oder parallel zum Kraftfeld ausgerichtet wird.

**Claims**

1. Method for recovering predeterminable plastic components of a specific plastic material or of a specific plastic composition from an unsorted or pre-sorted stream of recyclable material (W), wherein the predeterminable plastic components have been made distinguishable (V102; V1003) from other plastic components of the same plastic material or of the same plastic composition on the basis of at least one primary marker introduced during the production and/or use of the plastic material, and

   , and wherein the method comprises at least one separation step (V109; V1011), in which the stream of recyclable material (W) is separated on the basis of a first separation criterion into a first recyclate stream (R1) comprising the predeterminable plastic components and a first partial stream (T1),
   the separation criterion being based at least partially on properties of the primary marker,
   and the stream of recyclable material (W) comprises thermoplastics or preferably consists at least substantially of thermoplastics and is extruded by melt extrusion to form thermoplastic strands (3) or films and the strands or films are broken up into particles, in particular strand sections or film sections (V107; V1009),
   **characterised in that**
   the extrusion and break-up (V107; V1009) takes place before the first separation step, and the particles are fluidised (V108; V1010) following the extrusion and break-up (V107; V1009) by introduction into a stream of fluidising medium.

2. The method according to claim 1, **characterized in that** the stream of recyclable material (W) is extruded by melt extrusion into thermoplastic strands or films having a predetermined shape, in particular a predetermined cross-sectional shape, before the separation step (V109; V1011, V1013),
   and the extruded strands (3) or films are broken up (V107; V1009) into particles having a predetermined length, in particular into strand sections or film sections.

3. The method according to claim 2, wherein the particles are preferably and at least substantially uniform.

4. The method according to any one of the preceding claims, **characterized in that** the particles are introduced into and transported by a stream of fluidising medium having a laminar flow (V108; V1010), the fluidising medium subsequently being formed, in particular, as a floating bed or as a fluidized bed.

5. The method according to any one of the preceding claims, **characterized in that** the fluidizing medium comprises water, a solvent, air, an inert or noble gas and/or a mixture thereof.

6. The method according to any one of the preceding claims, **characterized in that** the particles have in at least one dimension a maximum extension smaller than 1000 $\mu$m.

7. The method according to any one of the preceding claims, **characterized in that** the particles have an anisotropic geometry, in particular with a Wadell sphericity of less than 0.8, preferably less than 0.75 or particularly preferably less than 0.7 and/or an aspect ratio of less than 0.8, preferably less than 0.7 or particularly preferably less than 0.5.

8. The method according to one of the preceding claims, **characterized in that** the extrusion of the strands or films and/or their break-up (V107; V1009) into particles and/or their fluidization (V108; V1010) in the fluidising medium takes place continuously.

9. The method according to one of the preceding claims, **characterized in that** the particles are homogeneously distributed in the fluidizing medium after their fluidization.

10. The method according to one of the preceding claims, **characterized in that** marker particles are introduced (V102; V1003; V1004) into the predeterminable plastic components during the production and/or use of the plastic, so that the predeterminable plastic portions can be distinguished from similar plastic portions without marker particles on the basis of the material properties in a field of force, in particular the density properties and/or electrical charge properties and/or magnetic properties and/or electromagnetic, in particular optical, properties.

11. The method according to one of the preceding claims, **characterised in that** the predeterminable plastic components comprise a secondary marker and optionally further markers and/or that the first or at least one further separation criterion is based on properties of the primary markers and/or the secondary markers and/or properties naturally inherent to the plastic components.

12. The method according to any one of the preceding claims, **characterized in that** the plastic materials or plastic compositions of the stream of recyclable material (W) are microseparated (V107; V1009), the microseparation preferably being carried out by extruding the stream of recyclable material (W) to form strands or films having a predetermined diameter or a predetermined thickness, the diameter or the thickness being below a size of phase islands of immiscible polymers which are present in the melt as singe-type material phase islands when the melt is melted.

13. The method according to any one of the preceding claims, **characterized in that** the method comprises a treatment step (V110; V1012), in which marker particles and/or other particles, in particular undesirable contaminants, are separated out from the extruded particles, in particular by extraction or emission, the fluidizing medium preferably also serving as an extraction agent, and/or that the method comprises a plurality of identical or different successive separation steps for separating the stream of recyclable material (W) on the basis of specific separation criteria, and/or **in that** the stream of recyclable material (W) passes through one or more separation steps (V109; V1011; V1013) a plurality of times.

14. The method according to any one of the preceding claims, **characterized in that** the method comprises at least one further separation step (V1013), in which a recyclate stream (R1) is separated into a second recyclate stream (R2) and a second partial stream (T2) on the basis of a second separation criterion, wherein the further separation step (V1013) uses properties of a secondary marker and/or properties inherent to the plastic components as separation criterion.

15. The method according to any one of the preceding claims, **characterized in that** the fluidized particles are subjected to at least one force field (V109; V1011; V1013) for separating the predeterminable plastic components, the force field being in particular a gravitational field, a magnetic field, an electrostatic field and/or an electromagnetic field, preferably a plurality of force fields being combined with one another, in particular being superimposed and/or arranged one behind the other, and a flow direction of the fluidising medium with the particles fluidised therein preferably being aligned perpendicularly or parallel to the force field.

**Revendications**

1. Procédé de récupération de fractions de matières synthétiques pouvant être spécifiées, triées sélectivement, d'un matériau en matière synthétique donné ou d'une composition de matières synthétiques donnée à partir d'un flux de matières de valeur (W) non triées ou triées au préalable, dans lequel les fractions de matière synthétique pouvant être spécifiées peuvent être différenciées (V102 ; V1003) d'autres fractions de matière synthétique du même matériau de matière synthétique ou de la même composition de matières synthétiques à l'aide d'au moins un marqueur primaire introduit lors de la fabrication et/ou de l'utilisation de la matière synthétique et dans lequel le procédé comprend au moins une étape de séparation (V109 ; V1011), où le flux de valeur (W) est divisé à l'aide d'un premier critère de séparation en un premier flux de recyclât (R1) comprenant la fraction de matières synthétiques pouvant être spécifiée et en un premier flux partiel (T1), dans lequel le critère de séparation se base au moins en partie sur des caractéristiques du marqueur primaire et le flux de valeur (W) comprend des matières synthétiques thermoplastiques ou est constitué de manière préférée au moins sensiblement de matières synthétiques thermoplastiques et est extrudé par extrusion de masse en fusion en boudins thermoplastiques (3) ou en films et les boudins ou les films sont fragmentés (V107 ; V1009) en particules, en particulier en portions de boudin ou en portions en film, **caractérisé en ce que** l'extrusion et la fragmentation (V107 ; V1009) ont lieu avant la première étape de séparation et les particules sont, immédiatement après l'extrusion et la fragmentation (V107 ; V1009), fluidifiées (V108 ; V1010) par introduction dans un agent de fluidification circulant.

2. Procédé selon la revendication 1, **caractérisé en ce que** le flux de valeur (W) est extrudé avant l'étape de séparation (V109 ; V1011, V1013) par extrusion de masse en fusion en des boudins ou films thermoplastiques avec une forme spécifiée, en particulier une forme de section transversale spécifiée, et les boudins (3) ou films extrudés sont fragmentés (V107 ; V1009) en particules avec une longueur spécifiée, en particulier en des portions de boudin ou des portions de film.

3. Procédé selon la revendication 2, dans lequel les particules sont de manière préférée et au moins sensiblement de forme identique.

4. Procédé selon l'une quelconque des revendications précédentes, **caractérisé en ce que** les particules sont introduites et sont transportées (V108 ; V1010) dans un agent de fluidification circulant avec un écoulement laminaire, dans lequel l'agent de fluidification est réalisé ensuite en particulier en tant que lit flottant ou en tant que lit fluidisé.

5. Procédé selon l'une quelconque des revendications précédentes, **caractérisé en ce que** l'agent de fluidification comprend de l'eau, un solvant, de l'air, un gaz inerte ou un gaz rare et/ou un mélange de ceux-ci.

6. Procédé selon l'une quelconque des revendications précédentes, **caractérisé en ce que** les particules présentent dans au moins une dimension une extension maximale inférieure à 1000 pm.

7. Procédé selon l'une quelconque des revendications précédentes, **caractérisé en ce que** les particules présentent une géométrie anisotrope, en particulier avec une sphéricité de Wadell inférieure à 0,8, de manière préférée inférieure à 0,75 ou de manière particulièrement préférée inférieure à 0,7 et/ou un rapport de côtés inférieur à 0,8, de manière préférée inférieur à 0,7 et de manière particulièrement préférée inférieur à 0,5.

8. Procédé selon l'une quelconque des revendications précédentes, **caractérisé en ce que** l'extrusion des boudins ou des films et/ou leur fragmentation (V107 ; V1009) en particules et/ou leur fluidification (V108 ; V1010) dans l'agent de fluidification sont effectuées en continu.

9. Procédé selon l'une quelconque des revendications précédentes, **caractérisé en ce que** les particules sont réparties de manière homogène dans l'agent de fluidification après leur fluidification.

10. Procédé selon l'une quelconque des revendications précédentes, **caractérisé en ce que** des particules de marqueur sont introduites (V102 ; V1003 ; V1004) dans les particules de matière synthétique pouvant être spécifiées lors de la fabrication et/ou de l'utilisation de la matière synthétique de sorte que les fractions de matière synthétique pouvant être spécifiées peuvent être différenciées par rapport à des fractions de matière synthétique similaires sans particules de marqueur à l'aide des caractéristiques de matériau dans un champ de force, en particulier des caractéristiques de densité et/ou des caractéristiques de charge électrique et/ou des caractéristiques magnétiques et/ou des caractéristiques électromagnétiques, en particulier optiques.

11. Procédé selon l'une quelconque des revendications précédentes, **caractérisé en ce que** les fractions de matière synthétique pouvant être spécifiées comprennent un marqueur secondaire et éventuellement d'autres marqueurs, et/ou que le premier ou au moins un autre critère de séparation se base sur des caractéristiques des marqueurs primaires et/ou des marqueurs secondaires et/ou sur des caractéristiques naturelles intrinsèques de la fraction de matières synthétiques.

12. Procédé selon l'une quelconque des revendications précédentes, **caractérisé en ce que** les matériaux en matière synthétique ou les compositions de matières synthétiques du flux de matière de valeur (W) sont microséparées (V107 ; V1009) en particules lors de l'extrusion de masse en fusion et/ou de la fragmentation consécutive, dans lequel la microséparation est effectuée de manière préférée par l'extrusion du flux de matière de valeur (W) en boudins ou en films avec un diamètre spécifié ou une épaisseur spécifiée, dans lequel le diamètre ou l'épaisseur se situe sous une grandeur d'amas de phase de polymères non miscibles présents sous une forme triée sélectivement lors de la fusion dans la masse fondue

13. Procédé selon l'une quelconque des revendications précédentes, **caractérisé en ce que** le procédé comprend une étape de préparation (V110 ; V1012), où des particules de marqueur et/ou d'autres particules, en particulier des contaminations non souhaitées, sont éliminées par tri des particules extrudées, en particulier par extraction ou émission, dans lequel l'agent de fluidification fait office de manière préférée également d'agent d'extraction et/ou le procédé comprend plusieurs étapes de séparation similaires ou différentes réalisées les unes après les autres pour séparer le flux de matière de valeur (W) à l'aide de critères de séparation donnés, et/ou que le flux de matière de valeur (W) passe à maintes reprises par une ou plusieurs étapes de séparation (V109 ; V1011 ; V1013).

14. Procédé selon l'une quelconque des revendications précédentes, **caractérisé en ce que** le procédé comprend au moins une autre étape de séparation (V1013), où un flux de recyclât (R1) est séparé à l'aide d'un deuxième critère de séparation en un deuxième flux de recyclât (R2) et en un deuxième flux partiel (T2), dans lequel l'autre étape de séparation (V1013) utilise en tant que critère de séparation des caractéristiques d'un marqueur secondaire et/ou des caractéristiques intrinsèques des fractions de matières synthétiques.

15. Procédé selon l'une quelconque des revendications précédentes, **caractérisé en ce que** les particules fluidifiées sont exposées au moins à un champ de force (V109 ; V1011 ; V1013) pour l'élimination par séparation des fractions de matières synthétiques pouvant être spécifiées, dans lequel le champ de force est en particulier un champ gravitationnel, un champ magnétique, un champ électrostatique et/ou un champ électromagnétique, dans lequel de manière préférée plusieurs champs de force sont combinés les uns aux autres, en particulier sont superposés et/ou sont disposés les uns derrière les autres et une direction d'écoulement de l'agent de fluidification avec les particules fluidifiées dans celui-ci est orientée de manière préférée de manière perpendiculaire ou de manière parallèle par rapport au champ de force.

**Fig. 1**

**Fig. 2a**

**Fig. 2b**

**Fig. 2c**

```
┌─────────────────────────────────────┐
│  Bereitstellung Ausgangsmaterial PP  │ ─── V101
└─────────────────────────────────────┘
                 │
                 ▼
┌─────────────────────────────────────┐
│           Markierung PP              │ ─── V102
└─────────────────────────────────────┘
                 │                              V103
                 ▼                                                          S
┌─────────────────────────────────┐   ┌─────────────────────────────────┐
│   PP zu Verpackung verarbeiten   │   │    Bereitstellung Stoffstrom    │
└─────────────────────────────────┘   └─────────────────────────────────┘
                   │                            │
                   └──────────┐      ┌──────────┘
                              ▼      ▼
                 ┌─────────────────────────────────────┐
                 │     Vermischung zu Wertstoffstrom    │ ─── V104
                 └─────────────────────────────────────┘
                                 │
                                 ▼
                 ┌─────────────────────────────────────┐
                 │             Vorsortierung            │ ─── V105
                 └─────────────────────────────────────┘
                                 │
                                 ▼
                 ┌─────────────────────────────────────┐
                 │            Zerkleinerung             │ ─── V106
                 └─────────────────────────────────────┘
                                 │
                                 ▼
                 ┌─────────────────────────────────────┐
                 │   Micronisierung & Microseparation   │ ─── V107
                 └─────────────────────────────────────┘
                                 │
                                 ▼
                 ┌─────────────────────────────────────┐
                 │            Fluidisierung             │ ─── V108
                 └─────────────────────────────────────┘
                                 │
                                 ▼
                 ┌─────────────────────────────────────┐
            R1   │   Trennungsschritt  im Magnetfeld    │ ─── V109      T1
                 └─────────────────────────────────────┘
                      │                        │
                      ▼                        ▼
      ┌─────────────────────────┐   ┌─────────────────────────┐
      │   Erster Recyclat-Strom  │   │    Erster Abfallstrom   │
      └─────────────────────────┘   └─────────────────────────┘
                  │                              ┊
                  ▼                              ▼
      ┌─────────────────────────┐
      │    Aufbereitungsschritt  │
      └─────────────────────────┘ ─── V110
           │              │
           ▼              ▼
 ┌───────────────────┐  ┌─────────────────────────┐
 │ Zweiter Recyclat- │  │    Zweiter Abfallstrom   │ ─── T2
 │      Strom        │  └─────────────────────────┘
 └───────────────────┘           ┊
          │                      ▼
          R2
```

## Fig. 3

Bereitstellung PE — V1001

Bereitstellung PA6 — V1002

Primärmarkierung mit Magnetit — V1003

Sekundärmarkierung mit Betonit — V1004

V1005 — Herstellung Verbundmaterial PA6/PE

Bereitstellung Stoffstrom — S

| Vermischung zu Wertstoffstrom | — V1006 |
| Vorsortierung | — V1007 |
| Zerkleinerung | — V1008 |
| Micronisierung & Microseparation | — V1009 |
| Fluidisierung | — V1010 |
| Trennungsschritt im Magnetfeld | — V1011 |

| Erster Recyclat-Strom | R1 |
| Aufbereitungsschritt | — V1012 |

T1 — Erster Teilstrom

Zweiter Recyclat-Strom — R2

Zweiter Teilstrom — T2

Trennungsschritt in Gravitationsfeld — V1013

Dritter Recyclat-Strom — R3

Dritter Teilstrom — T3

**Fig. 4**

a)

b)

c)

d)

e)

f)

g)

h)

i)

j)

l)

**Fig. 5**

EP 3 972 795 B1

**IN DER BESCHREIBUNG AUFGEFÜHRTE DOKUMENTE**

**In der Beschreibung aufgeführte Patentdokumente**

- WO 2018091356 A1
- DE 102017118601 A1
- DE 4401207 A1
- WO 2004012920 A2
- WO 200107166 A1
- WO 2019180438 A2